# EUROPÄISCHE PATENTSCHRIFT

(11) **EP 3 805 878 B1**
(45) Veröffentlichungstag und Bekanntmachung des Hinweises auf die Patenterteilung: **15.06.2022**
(21) Anmeldenummer: 19202696.1
(22) Anmeldetag: 11.10.2019
(51) Int. Cl.: G05B 19/042

(54) **VERFAHREN ZUR VISUALISIERUNG VON BILDSCHIRMINHALTEN AUF EINEM DATENVISUALISIERUNGSSYSTEM SOWIE DATENVISUALISIERUNGSSYSTEM ZUR VISUALISIERUNG VON BILDSCHIRMINHALTEN**
METHOD FOR VISUALIZING DISPLAY DATA ON A DATA DISPLAY SYSTEM AND A DATA DISPLAY SYSTEM FOR VISUALIZING DISPLAY DATA
PROCÉDÉ DE VISUALISATION DE CONTENU D'ÉCRAN SUR UN SYSTÈME DE VISUALISATION DE DONNÉES AINSI QUE SYSTÈME DE VISUALISATION DE DONNÉES DESTINÉ À LA VISUALISATION DU CONTENU DE L'ÉCRAN

(43) Veröffentlichungstag der Anmeldung: 14.04.2021
(73) Patentinhaber: Siemens Aktiengesellschaft, 80333 München (DE)
(72) Erfinder: Büttner, David, 80339 München (DE); Sedlacek, Matous, 84034 Landshut (DE); Strobel, Holger, 90556 Steinbach (DE)

(56) Entgegenhaltungen:
- EP-A1- 2 840 455
- US-A1- 2009 222 752
- US-A1- 2017 126 841
- GRILO ANTONIO M ET AL: "An Integrated WSAN and SCADA System for Monitoring a Critical Infrastructure", IEEE TRANSACTIONS ON INDUSTRIAL INFORMATICS, IEEE SERVICE CENTER, NEW YORK, NY, US, Bd. 10, Nr. 3, 1. August 2014 (2014-08-01) , Seiten 1755-1764, XP011555951, ISSN: 1551-3203, DOI: 10.1109/TII.2014.2322818 [gefunden am 2014-08-04]

## Beschreibung

Die Erfindung bezieht sich auf ein Verfahren zur Visualisierung von Bildschirminhalten auf einem Datenvisualisierungssystem gemäß dem Oberbegriff des Patentanspruches 1 und ein Datenvisualisierungssystem zur Visualisierung von Bildschirminhalten gemäß dem Oberbegriff des Patentanspruches 6.

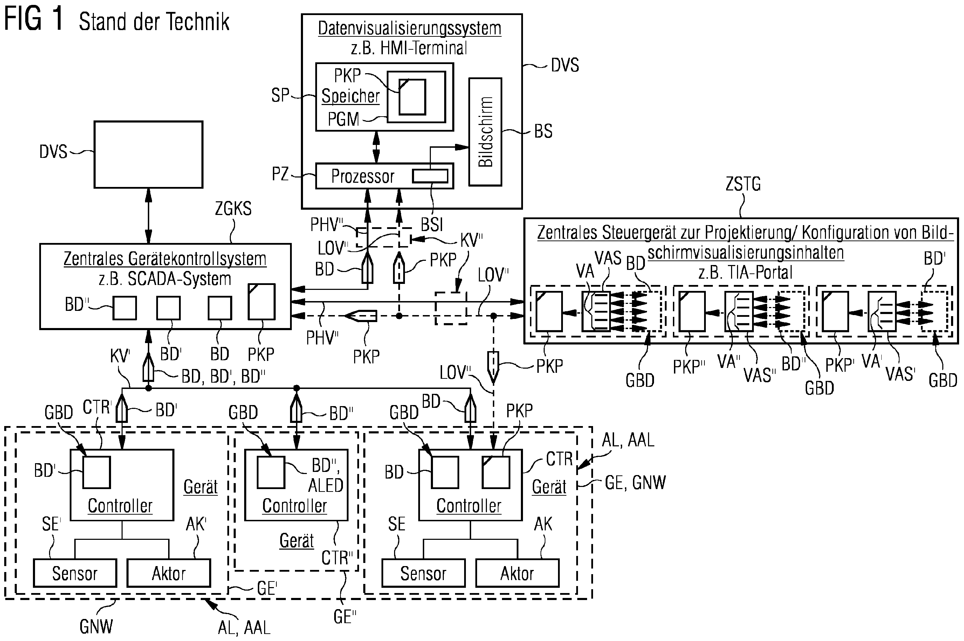

Anforderungen hinsichtlich der Visualisierung von Bildschirminhalten können in unterschiedlichen technischen Bereichen (technical domains) bestehen, so insbesondere in der industriellen Automatisierung. Im Rahmen der Entwicklungen des "Industrial Internet of Things (IIoT)" werden Fabrik-Automation-Lösungen in naher Zukunft eine beliebig große Anzahl an vernetzten Geräten unterstützen können müssen, was mit einem Zentralen Engineering - wie es nachfolgend anhand der FIGUR 1 beschrieben wird - nicht mehr effektiv möglich sein wird. Unter Anderem wird auch die Frequenz der Veränderungen in einer Automatisierungsanlage, die für den Produktionsprozess vorgesehen ist, drastisch ansteigen.

Zur Visualisierung der Bildschirminhalte werden dabei Datenvisualisierungssysteme eingesetzt, die z.B. als Human Machine Interface (HMI)-Terminal ausgebildet sein können und in dieser Form und Gestalt nicht nur im Kontext der Fabrikautomatisierung eingesetzt werden, sondern auch ganz allgemein auf jedem technischen Feld, wo es um den Einsatz von technischen Anlagen geht, um eine Monitoring- oder Kontroll-Funktionalität bezogen auf einen technischen Prozess, insbesondere den vorstehend bereits erwähnten Produktionsprozess - z.B. einen aktueller Zustand, Zugriff auf historische Daten, etc. - zu ermöglichen. Die gesammelten Datensätze werden typischerweise mit Hilfe von schnell verständlichen grafischen Objekten wie Graphen, Listen, Buttons, Zeigerinstrumente, etc. auf Geräten zum Bedienen und Beobachten wie die die HMI-Terminals dargestellt.

Im Umfeld der Fabrikautomatisierung müssen die Bildschirminhalte der HMI-Terminals manuell erstellt und mit entsprechenden Datenquellen verknüpft werden. Dies erfolgt in der Regel über ein Zentrales Engineering Tool, das z.B. als ein "Totally Integrated Automation (TIA)"-Portal realisiert sein kann. Die Erstellung muss bei jedem Endkunden einzeln - meist von einem Service-Fachmann mit Domain-Knowhow - durchgeführt werden. Dies wird nachfolgend im Zusammenhang mit der Beschreibung der FIGUR 1, die den Stand der Technik repräsentiert, erläutert.

Müssen dann Änderungen am Bildschirminhalt der HMI-Terminals vorgenommen werden, so erfordern diese einen Neustart der vollständigen Automatisierungs-Software, d.h., die Produktion in der Fabrik kommt teilweise oder gar im Ganzen zum Stillstand. Hierbei werden die Veränderungen im System übernommen und bei Neustart der Automatisierungssoftware an die entsprechenden HMI Geräte ausgeliefert. Auch bei sehr vielen Geräten und häufigen Änderungen muss immer jeweils zum Zentralen Engineering Tool gegriffen werden.

Die Patentanmeldung EP 2 840 455 A1 offenbart ein Verfahren zur Visualisierung von Gerätebetriebsdaten auf einem Datenvisualisierungssystem, bei dem im Kontext der Überwachung eines angeschlossenen, vernetzten Geräts einer technischen Anlage Gerätebetriebsdaten mit Visualisierungsaspekten verknüpfbar sind und ein Plug-and-Play-Protokoll zwischen dem Datenvisualisierungssystem und dem Gerät ausgeführt wird.

Außerdem bietet die KEBA GmbH Automation mit der Lösung "Ke-Top" über das Tool "KeStudio ViewEdit" ein Engineering Tool an mit dem man User Interfaces für deren HMI-Geräte designen und anschließend auf Keba-Geräten verfügbar machen kann. Ebenso bietet die Beckhoff Automation GmbH & Co. KG mit dem Tool "TwinCAT 3" ein Zentrales Engineering Framework an, mit dem User Interfaces für HMI-Geräte projektiert/konfiguriert und verfügbar gemacht werden müssen.

FIGUR 1 zeigt ein zentrales Engineering zur Visualisierung von Bildschirminhalten auf einem Datenvisualisierungssystem DVS wie es in bekannter Weise durchgeführt wird, bei dem das Datenvisualisierungssystem DVS, wie vorstehend bereits erwähnt, z.B. als HMI-Terminal ausgebildet sein kann. Das zentrale Engineering kann durchaus auch mehrere Datenvisualisierungssysteme DVS umfassen. So sind es gemäß der FIGUR 1 zwei Datenvisualisierungssysteme DVS, auf denen Bildschirminhalte visualisiert werden können. Exemplarisch wird die Bildschirminhaltvisualisierung anhand eines Datenvisualisierungssystems DVS der beiden dargestellten Datenvisualisierungssysteme DVS erläutert. Das besagte Datenvisualisierungssystem DVS weist einen nicht-flüchtigen, lesbaren Speicher SP, in dem prozessorlesbare Steuerprogrammbefehle eines die Bildschirminhaltvisualisierung durchführenden Programm-Moduls PGM gespeichert sind, einen mit dem Speicher SP verbundenen Prozessor PZ, der die Steuerprogrammbefehle des Programm-Moduls PGM zur Bildschirminhaltvisualisierung ausführt und einen Bildschirm BS auf.

Zur Visualisierung eines Bildschirminhaltes BSI greift der Prozessor PZ einerseits auf den Speicher SP mit dem Programm-Modul PGM zu, um den Bildschirminhalt BSI zu generieren und steuert andererseits den Bildschirm BS an, so dass der generierte Bildschirminhalt BSI dort visualisiert werden kann. Wie die Generierung des Bildschirminhalt BSI in dem Prozessor PZ mit der Ausführung der Steuerprogrammbefehle des Programm-Moduls PGM zur Bildschirminhaltvisualisierung erfolgt, wird weiter unten im Zusammenhang mit der Beschreibung der FIGUR 1 erläutert.

Die beim zentralen Engineering für die Bildschirminhaltvisualisierung zu projektierenden/zu konfigurierenden Bildschirminhalte beinhalten dabei ganz allgemein Daten von anlage- und betriebstechnisch zu einem Gerätenetzwerk GNW vernetzten Geräten einer technischen Anlage AL. Als technische Anlage AL mit den Geräten kann grundsätzlich jede Art von technischer Anlage und jedes Gerät als Datenquelle dienen. Im dargestellten Fall ist die Anlage AL eine Automatisierungsanlage AAL im Produktionsprozess. Bezüglich der Geräte in dem Gerätenetzwerk GNW kann die Anlage AL, AAL entweder ein erstes Gerät GE oder mehrere, z.B. drei, Geräte, ein erstes Gerät GE, ein zweites Gerät GE' und ein drittes Gerät GE", umfassen, die zusammen mit gegebenenfalls weiteren Geräten als die drei dargestellten Geräte GE, GE', GE" als Datenquellen allesamt Gerätebetriebsdaten GBD zur Verfügung stellen und in dem Gerätenetzwerk GNW miteinander verbunden sind.

Von den in der FIGUR 1 dargestellten, das bzw. die Gerätenetzwerke GNW bildenden Geräten GE, GE', GE" weist das erste Gerät GE einen ersten Controller CTR, der mit einen ersten Sensor SE und einem ersten Aktor AK verbunden ist, wobei sowohl der erste Sensor SE als auch der erste Aktor AK Daten liefern, die als Betriebsdaten BD des ersten Gerätes GE, also als gerätespezifische Betriebsdaten BD, der Gerätebetriebsdaten GBD in dem ersten Controller CTR gespeichert werden.

Das zweite Gerät GE' weist einen zweiten Controller CTR', der mit einen zweiten Sensor SE' und einem zweiten Aktor AK' verbunden ist, wobei auch hier wieder sowohl der zweite Sensor SE' als auch der zweite Aktor AK' Daten liefern, die als weitere Betriebsdaten BD' des zweiten Gerätes GE, also als weitere gerätespezifische Betriebsdaten BD', der Gerätebetriebsdaten GBD in dem zweiten Controller CTR' gespeichert werden.

Ein wenig anders sieht die Situation beim dritten Gerät GE" aus. Das dritte Gerät GE" weist zwar auch wieder einen Controller auf, nämlich einen dritten Controller CTR", allerdings ist dieser im Unterschied zu den Controllern CTR, CTR' der anderen beiden Geräten GE, GE' nicht mit einem Daten liefernden Sensor und Aktor verbunden. Nichtsdestotrotz liefert auch das dritte Gerät GE" als Datenquelle gerätespezifische Betriebsdaten der Gerätebetriebsdaten GBD. So sind in dem dritten Controller CTR" zusätzliche Betriebsdaten BD" des dritten Gerätes GE" gespeichert, die als Anlageerzeugungsdaten ALED der technischen Anlage AL, AAL ausgebildet sind. Die Anlageerzeugungsdaten ALED sind Daten die dadurch erzeugt werden, dass das dritte Gerät GE" von den anderen beiden Geräten GE, GE' in dem Gerätenetzwerk GNW Gerätebetriebsdaten GBD erhält und die Anlageerzeugungsdaten ALED aus diesen übertragenen Gerätebetriebsdaten GBD, z.B. durch Berechnung, erzeugt werden.

Die Controller CTR, CTR', CTR" sind vorzugsweise und nicht zuletzt im Fall der Automatisierungsanlage AAL als Programmable Logic Controller (PLC) ausgebildet.

Die in den Geräten GE, GE', GE" gespeicherten gerätespezifische Betriebsdaten BD, BD', BD" werden jetzt zentral verwaltet. Dazu sind die Geräte GE, GE', GE" des Gerätenetzwerkes GNW über eine Kommunikationsverbindung KV', die z.B. im Fall der Automatisierungsanlage AAL vorzugsweise ein PROFIBUS oder PROFINET sein kann, mit einem Zentralen Gerätekontrollsystem ZGKS verbunden. Über diese Kommunikationsverbindung KV' gelangen die gerätespezifische Betriebsdaten BD, BD', BD" entweder gemäß dem PULL- oder PUSH-Mechanismus an das Zentrale Gerätekontrollsystem ZGKS. Das Zentrale Gerätekontrollsystem ZGKS ist dabei vorzugsweise als ein "Supervisory Control and Data Acquisition (SCADA)"-System ausgebildet.

Neben dem Zentralen Gerätekontrollsystem ZGKS mit den Geräten GE, GE', GE" in dem Gerätenetzwerk GNW einerseits und dem Datenvisualisierungssystem DVS bzw. den Datenvisualisierungssystemen DVS andererseits ist für das in bekannter Weise Durchführen des zentralen Engineering zur Bildschirminhaltvisualisierung noch ein Zentrales Steuergerät zur Projektierung/Konfiguration von Bildschirmvisualisierungsinhalten ZSTG vorhanden. Dieses als das eingangs bereits erwähnte Zentrale Engineering Tool ausgebildete Steuergerät ZSTG ist jetzt vorzugsweise das TIA-Portal, das auf einer "Field PG/PC"-Komponente läuft.

Für die Projektierung/Konfiguration der Bildschirmvisualisierungsinhalte, die in dem Zentralen Steuergerät ZSTG zentral, im Offline-Betrieb der Anlage AL, AAL z.B. von einem Service-Anlagentechniker oder vom Benutzer der Anlage durch Hinzuziehung einer Bedienungs- und/oder Serviceanleitung für jedes Gerät GE, GE', GE" in dem Gerätenetzwerk GNW vor Ort manuell durchgeführt wird, kann in dem Zentralen Steuergerät ZSTG aus für die Geräte GE, GE', GE" verfügbaren Sätzen von Visualisierungsaspekten - einem ersten Visualisierungsaspektsatz VAS mit z.B. fünf (wie in der FIGUR 1 durch eine Strichliste dargestellt) Visualisierungsaspekten für das erste Gerät GE, einem zweiten Visualisierungsaspektsatz VAS' mit z.B. drei (wie in der FIGUR 1 durch eine Strichliste dargestellt) Visualisierungsaspekten für das zweite Gerät GE' und einem dritten Visualisierungsaspektsatz VAS" mit z.B. vier (wie in der FIGUR 1 durch eine Strichliste dargestellt) Visualisierungsaspekten für das dritte Gerät GE" - jeder Visualisierungsaspekt mit an diesem Visualisierungsaspekt jeweils gebundene gerätespezifische Betriebsdaten BD, BD', BD" der Gerätebetriebsdaten GBD verknüpft werden.

So können fünf erste Visualisierungsaspekte VA des ersten Visualisierungsaspektsatzes VAS mit den ersten Betriebsdaten BD, drei zweite Visualisierungsaspekte VA' des zweiten Visualisierungsaspektsatzes VAS' mit den zweiten Betriebsdaten BD' und vier dritte Visualisierungsaspekte VA" des dritten Visualisierungsaspektsatzes VAS" mit den dritten Betriebsdaten BD" manuell verknüpft werden. Mit dieser manuellen Verknüpfung wird jeweils ein Projektierungs-/Konfigurationsprogramm erzeugt und zwar ein erstes Projektierungs-/Konfigurationsprogramm PKP bei der Verknüpfung der fünf ersten Visualisierungsaspekte VA mit den ersten Betriebsdaten BD, ein zweites Projektierungs-/Konfigurationsprogramm PKP' bei der Verknüpfung der drei zweiten Visualisierungsaspekte VA' mit den zweiten Betriebsdaten BD sowie ein drittes Projektierungs-/Konfigurationsprogramm PKP" bei der Verknüpfung der vier dritten Visualisierungsaspekte VA" mit den dritten Betriebsdaten BD.

Der Visualisierungsaspekt einschließlich der Datenbindung, also den Bindungen zu den Betriebsdaten BD, BD', BD", beinhaltet dabei beispielsweise die grafische Repräsentation der gewünschten oder notwendigen Bildinformationen, Graphen, die Visualisierungs-/Darstellungslogik, die Verknüpfung mit der Datenquelle als das Gerät GE, GE', GE" mit den gerätespezifischen Betriebsdaten BD, BD', BD", usw.

Der zentrale Engineering-Workflow zum Projektieren/Konfigurieren der Bildschirmvisualisierungsinhalte auf dem Datenvisualisierungssystem DVS bzw. dem HMI-Terminal über das Zentrale Steuergerät zur Projektierung/Konfiguration der Bildschirmvisualisierungsinhalte ZSTG soll nachfolgend exemplarisch anhand der in dem ersten Controller CTR des ersten Gerätes GE der Anlage AL, AAL gespeicherten und in dem Zentrale Gerätekontrollsystem ZGKS als zentrale Sammelstelle verwalteten ersten Betriebsdaten BD der insgesamt von den Geräten GE, GE', GE" in der Anlage ASL, AAL gelieferten und verwalteten Gerätebetriebsdaten GBD erläutert werden.

Alternativ könnte der Workflow - ohne jegliche Einschränkung - auch anhand der zweiten oder dritten Geräte GE', GE" mit den gerätespezifischen Betriebsdaten BD', BD" skizziert werden.

Der zentrale Engineering-Workflow beginnt damit, dass das Datenvisualisierungssystem DVS und das Zentrale Steuergerät ZSTG mit dem Zentralen Gerätekontrollsystem ZGKS jeweils über eine weitere Kommunikationsverbindung KV" verbunden wird, wobei diese jeweils durch eine Logische Verbindung LOV" und eine Physikalische Verbindung PHV" charakterisiert ist. Mit der kommunikationstechnischen Verbindung zwischen dem Zentralen Steuergerät ZSTG und dem Zentralen Gerätekontrollsystem ZGKS lassen sich in Bezug auf das exemplarische Projektieren/Konfigurieren der Bildschirmvisualisierungsinhalte anhand der ersten Betriebsdaten BD des ersten Gerätes GE diese gerätespezifischen Betriebsdaten BD - jetzt wie vorstehend bereits beschrieben - mit den ersten Visualisierungsaspekten VA des ersten Visualisierungsaspektsatzes zu dem ersten Projektierungs-/Konfigurationsprogramm PKP manuell verknüpfen.

In einem nächsten Schritt des zentralen Engineering-Workflows wird das so in dem Zentralen Steuergerät ZSTG erzeugte, erste Projektierungs-/Konfigurationsprogramm PKP mit den Visualisierungsaspekten VA und den Bindungen zu den ersten Betriebsdaten BD (den Datenbindungen) über die Logische Verbindung LOV" der weiteren Kommunikationsverbindung KV" an das Zentrale Gerätekontrollsystem ZGKS und von dort an das erste Gerät GE sowie an das Datenvisualisierungssystem DVS zur jeweils dortigen Hinterlegung übertragen. In dem Datenvisualisierungssystem DVS wird das erste Projektierungs-/Konfigurationsprogramm PKP mit den Visualisierungsaspekten VA und den Datenbindungen über den Prozessor PZ in den Speicher SP als Bestandteil des Programm-Moduls PGM abgelegt, wo das das erste Projektierungs-/Konfigurationsprogramm PKP unmittelbar oder zeitversetzt ausgeführt wird. Im Zuge dieser Programmausführung (auch als Deployment bezeichnet) werden jetzt unter der Steuerungshoheit des Prozessors PZ die ersten Betriebsdaten BD aus dem Zentralen Gerätekontrollsystem ZGKS über die Physikalische Verbindung PHV" in das Datenvisualisierungssystem DVS geladen. Ebenfalls unter der Steuerungshoheit des Prozessors PZ werden diese ersten Betriebsdaten BD anschließend in Bezug auf mindestens einen und im Kontext zu mindestens einem dedizierten Visualisierungsaspekt der mit dem ersten Projektierungs-/Konfigurationsprogramm PKP zur Verfügung gestellten ersten Visualisierungsaspekten VA zumindest teilweise als der Bildschirminhalt BSI auf dem Bildschirm BS visualisiert.

Die der Erfindung zugrundeliegende Aufgabe besteht darin, ein Verfahren zur Visualisierung von Bildschirminhalten auf einem Datenvisualisierungssystem sowie ein Datenvisualisierungssystem zur Visualisierung von Bildschirminhalten anzugeben, mit dem die Funktionalitätsüberwachung und -Kontrolle zukünftig bei drastisch ansteigender Frequenz der Veränderungen und im Zuge des "Internet der Dinge" ("Internet Of Things <IOT>") stark steigender Anzahl von vernetzten Geräten in technischen Anlagen, insbesondere im Produktionsprozess stehenden Automatisierungsanlagen, effektiv durchgeführt werden kann.

Diese Aufgabe wird ausgehend von dem im Oberbegriff des Patentanspruchs 1 definierten Verfahren durch die im Kennzeichen des Patentanspruches 1 angegebenen Merkmale gelöst.

Weiterhin wird die Aufgabe ausgehend von dem im Oberbegriff des Patentanspruchs 6 definierten Datenvisualisierungssystem durch die im Kennzeichen des Patentanspruches 6 angegebenen Merkmale gelöst.

Die der Erfindung gemäß den unabhängigen Ansprüchen 1 und 6 zugrundeliegende Idee besteht darin, im Kontext der Funktionalitätsüberwachung und -kontrolle von mindestens einem anlage- und betriebstechnisch zu einem Gerätenetzwerk vernetzten Gerät einer technischen Anlage einen Bildschirminhalt auf einem Datenvisualisierungssystem - insbesondere automatisch, dynamisch, z.B. im Online-Betrieb der Geräte bzw. der Anlage - zu visualisieren, bei dem jeder Visualisierungsaspekt von einem für das Gerät verfügbaren Satz von Visualisierungsaspekten mit an diesem Visualisierungsaspekt jeweils gebundene gerätespezifische Betriebsdaten von der Anlage bereitgestellten Gerätebetriebsdaten verknüpfbar ist. Dies geschieht dadurch, dass nach dem Einbinden des Systems in des Gerätenetzwerk durch das Ausführen eines Plug-and-Play-Protokolls nach Maßgabe eines Vorprojektierungs-/Vorkonfigurationsprogramms zwischen dem Datenvisualisierungssystem und dem Gerät und mit einem dedizierten (gewählten) Ansteuern des Gerätes in dem Gerätenetzwerk ein in dem Gerät zur Verfügung gestelltes Projektierungs-/Konfigurationsprogramm mit einer Vielzahl von Überwachungs-/Kontrollobjekten, wobei die Überwachungs-/Kontroll-objekte durch die Verknüpfung des Satzes der Visualisierungsaspekte mit den Visualisierungsaspekten und Visualisierungsaspekt-bezogenen Datenbindungen zu den gerätespezifischen Betriebsdaten der Gerätebetriebsdaten bestimmt und angegeben werden, in das Datenvisualisierungssystem geladen wird und dieses Projektierungs-/Konfigurationsprogramm ausgeführt wird, indem (i) in Bezug auf einen aus dem Satz der Visualisierungsaspekten mit den Visualisierungsaspekten ausgewählten Visualisierungsaspekt ein dazu korrespondierendes Überwachungs-/Kontrollobjekt aus den Überwachungs-/Kontrollobjekten ausgewählt wird, (ii) gemäß der Visualisierungsaspekt-bezogenen Datenbindung des ausgewählten Überwachungs-/Kontrollobjekts zu dieser Auswahl korrespondierende Betriebsdaten der gerätespezifische Betriebsdaten geladen werden und (iii) die ausgewählten Betriebsdaten in Bezug auf den ausgewählten Visualisierungsaspekt als der Bildschirminhalt visualisiert werden.

Gemäß der einer Weiterbildung der Erfindung (Ansprüche 2 und 7) ist es zweckmäßig, wenn das Datenvisualisierungssystem ein HMI-Terminal oder eine HMI-Anwendung ist. Die HMI-Anwendung ist vorzugsweise eine "APP" (APPLICATION), die z.B. auf einem herkömmlichen Personal Computer in der Gestalt eines Notebooks, eines Tablets, eines Smartphones, etc. implementiert ist und läuft.

Eine weitere vorteilhafte Weiterbildung der Erfindung (Ansprüche 3 und 8) besteht darin, dass der Satz der Visualisierungsaspekte mit den Visualisierungsaspekten und das Projektierungs-/Konfigurationsprogramm mit den Überwachungs-/Kontrollobjekten im Zuge der Geräteherstellung zur Verfügung gestellt wird.

Bezüglich eines weiteren Aspektes der Erfindung (Ansprüche 4 und 9) ist es zweckmäßig, wenn sich die Betriebsdaten und die Gerätebetriebsdaten auf Sensordaten, Aktordaten und/oder Anlageerzeugungsdaten der technischen Anlage erstrecken.

Die Erfindung kann zudem im Sinne einer einfachen Handhabung und Bedienung vorteilhaft dadurch weitergebildet werden (Ansprüche 5 und 10), dass der ausgewählte Visualisierungsaspekt aus dem Satz der Visualisierungsaspekte und das dazu korrespondierende ausgewählte Überwachungs-/Kontrollobjekt mit Hilfe eines Auswahlmenüs auf einem Bildschirm des Datenvisualisierungssystems ausgewählt wird.

Die erfindungsgemäße Lösung verzichtet auf das bekannte und in der Darstellung der FIGUR 1 enthaltene, vorzugsweise als Zentrales Engineering Tool, z.B. als TIA-Portal, für das zentrale Engineering ausgebildete, Zentrale Steuergerät zur Projektierung/Konfiguration von Bildschirmvisualisierungsinhalten und erlaubt es Geräte- oder Anlagenherstellern auf Domain-Knowhow basierende optimierte Visualisierungen oder Darstellungen der Gerätebetriebsdaten mit Hilfe der Überwachungs-/Kontrollobjekten, in denen die Visualisierungsaspekte einschließlich der Datenbindungen zu den Betriebsdaten enthalten sind, bereitzustellen. Diese können in einem Geräte-/Anlagensetup ohne zusätzlichen zentralen Engineering-Aufwand - bezüglich der Wahl der Visualisierungs- bzw. Darstellungsform, der Verknüpfung mit dem dediziert angesteuerten Gerät und deren Betriebsdaten, also der Datenquelle der Wahl, etc. - dezentral, automatisch, dynamisch und z.B. zur Laufzeit des Gerätes bzw. der Anlage, also online - in das Datenvisualisierungssystem geladen werden. Das Engineering findet also im Gegensatz zum in der FIGUR 1 repräsentierten Stand der Technik, wo es manuell und offline passiert, automatisch und online ohne ein zentrales Engineering statt.

Der Visualisierungsaspekt einschließlich der Datenbindung, also den Bindungen zu Gerätebetriebsdaten, beinhaltet die grafische Repräsentation der gewünschten oder notwendigen Bildinformationen, Graphen, die Visualisierungs-/Darstellungslogik, die Verknüpfung mit der Datenquelle, etc.

Der dezentrale Engineering-Workflow zur Projektierung/Konfiguration der Bildschirminhalte wird durch die Reihenfolge der kennzeichnenden Merkmale in den Ansprüchen 1 und 6 angegeben. Auf diese Weise kann das der Erfindung zugrunde liegend Problem effektiv umgesetzt, bei häufig auftretenden Veränderungen die zum Einsatz kommende Projektierungs-/Konfigurationssoftware, insbesondere das Projektierungs-/Konfigurationsprogramm, kontinuierlich genutzt und eine beliebige Anzahl von Geräten unterstützt werden.

Die erfindungsgemäße Lösung zeichnet sich insbesondere dadurch aus, dass eine beliebige Anzahl unterstützt werden, Bildschirminhalte zur Laufzeit ohne Neustart verteilt werden können, kein Engineering-Aufwand bezüglich der Visualisierung/Darstellung und der Verknüpfung der Datenquelle auf Anwender/Endkundenseite notwendig ist, das Domain-Know-how nur einmalig auf Herstellerseite angewandt werden muss und nicht wiederholt auf Kundenseite.

All das wird über eine dezentrale Bereitstellung der Bildschirminhalte adressiert, d.h. die Bildschirminhalte (Konfiguration, Definition und Projektierung) werden zur Laufzeit verteilt bereitgestellt.

Das erfindungsgemäße Konzept bereitet insbesondere im industriellen Umfeld auf zukünftige Technologien, die durch das "Industrial Internet of Things (IIoT)" charakterisiert sind, vor. Dieses Konzept ermöglicht auch, dass dem Endkunden, also dem Geräte- oder Anlagennutzer, auf diese Weise ein modularen und flexibel erweiterbares Datenvisualisierungssystem angeboten werden kann. Dadurch wird man aus der Sicht des Geräte-/Anlagenherstellers beim Endkunden flexibler in Bezug auf Veränderungen.

Zudem wird über eine themenbasierte Bereitstellung von Daten und Services die technische Anbindung von der logischen Anbindung entkoppelt.

Alternativ zu der Bereitstellung der Visualisierungsaspekte einschließlich der Datenbindungen, also der Bereitstellung der Überwachungs-/Kontrollobjekte, ist es auch denkbar, dass das Ganze nicht über die einzelnen Geräte, sondern über eine Internet-Plattform, so z.B. im industriellen Umfeld über die Siemens-spezifische Plattform "Mindsphere" anzubieten. Geräte würden in diesem Fall ihre Datenquelle bei der "Mindsphere" registrieren und mit vom Hersteller bereitgestellten Darstellungsbeschreibungen verknüpfen.

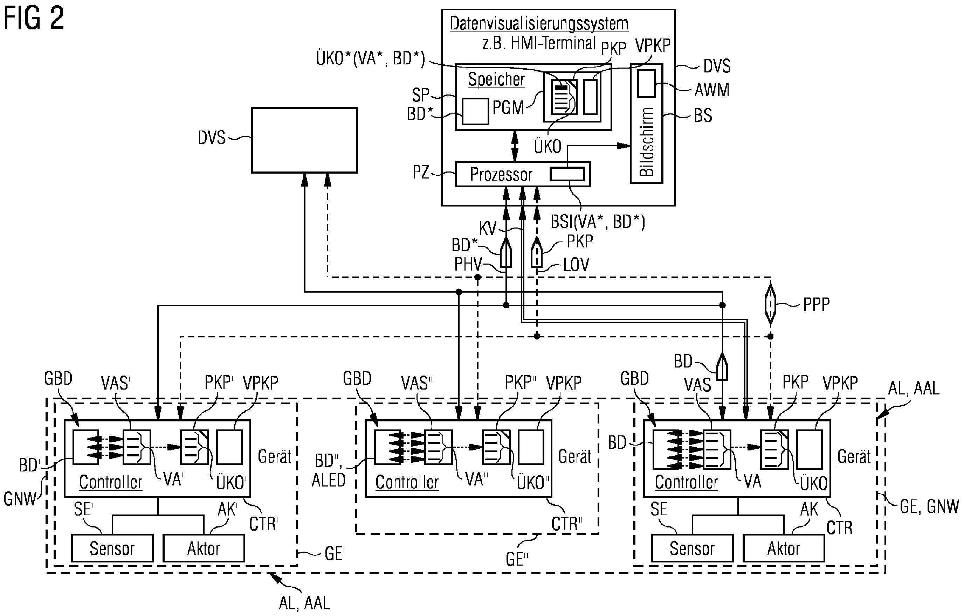

Weitere Vorteile der Erfindung ergeben sich ausgehend von der FIGUR 1 aus der nachfolgenden Beschreibung eines Ausführungsbeispiels der Erfindung anhand der FIGUR 2.

FIGUR 2 zeigt auf der Basis der FIGUR 1 ein dezentrales Engineering zur Visualisierung von Bildschirminhalten auf einem Datenvisualisierungssystem DVS wie es in bekannter Weise durchgeführt wird, bei dem das Datenvisualisierungssystem DVS, vorzugsweise entweder als HMI-Terminal oder als HMI-Anwendung in Form einer "APP" (APPLICATION), die z.B. auf einem herkömmlichen Personal Computer in der Gestalt eines Notebooks, eines Tablets, eines Smartphones, etc. implementiert ist und läuft, ausgebildet sein kann. Das dezentrale Engineering kann durchaus auch wieder mehrere Datenvisualisierungssysteme DVS umfassen. So sind es gemäß der FIGUR 2, wie bei der FIGUR 1, wieder zwei Datenvisualisierungssysteme DVS, auf denen Bildschirminhalte visualisiert werden können. Exemplarisch wird die Bildschirminhaltvisualisierung, wie bei der FIGUR 1, anhand eines Datenvisualisierungssystems DVS der beiden dargestellten Datenvisualisierungssysteme DVS erläutert.

Das besagte Datenvisualisierungssystem DVS weist wieder einen nicht-flüchtigen, lesbaren Speicher SP, in dem prozessorlesbare Steuerprogrammbefehle eines die Bildschirminhaltvisualisierung durchführenden Programm-Moduls PGM gespeichert sind, einen mit dem Speicher SP verbundenen Prozessor PZ, der die Steuerprogrammbefehle des Programm-Moduls PGM zur Bildschirminhaltvisualisierung ausführt und einen Bildschirm BS auf.

Zur Visualisierung eines Bildschirminhaltes BSI greift der Prozessor PZ einerseits auf den Speicher SP mit dem Programm-Modul PGM zu, um den Bildschirminhalt BSI zu generieren und steuert andererseits den Bildschirm BS an, so dass der generierte Bildschirminhalt BSI dort visualisiert werden kann. Wie die Generierung des Bildschirminhalt BSI in dem Prozessor PZ mit der Ausführung der Steuerprogrammbefehle des Programm-Moduls PGM zur Bildschirminhaltvisualisierung erfolgt, wird weiter unten im Zusammenhang mit der Beschreibung der FIGUR 2 erläutert.

Im Unterschied zu dem Datenvisualisierungssystem DVS in der FIGUR 1 ist bei dem in der FIGUR 2 dargestellten Datenvisualisierungssystem DVS ein Vorprojektierungs-/Vorkonfigurationsprogramm VPKP als Bestandteil des Programm-Moduls PGM in dem Speicher SP gespeichert und es kann auf dem Bildschirm BS ein Auswahlmenü AWM dargestellt werden. Was es mit dem Vorprojektierungs-/Vorkonfigurationsprogramm VPKP und dem Auswahlmenü AWM auf sich hat, wird weiter unten bei der Beschreibung der FIGUR 2 erläutert.

Die beim dezentralen Engineering für die Bildschirminhaltvisualisierung zu projektierenden/zu konfigurierenden Bildschirminhalte beinhalten wieder, wie beim zentralen Engineering dargestellt in der FIGUR 1, ganz allgemein Daten von anlage- und betriebstechnisch zu einem Gerätenetzwerk GNW vernetzten Geräten einer technischen Anlage AL. Als technische Anlage AL mit den Geräten kann grundsätzlich wieder jede Art von technischer Anlage und jedes Gerät als Datenquelle dienen. Im dargestellten Fall ist die Anlage AL eine Automatisierungsanlage AAL im Produktionsprozess. Bezüglich der Geräte in dem Gerätenetzwerk GNW kann die Anlage AL, AAL entweder ein erstes Gerät GE oder mehrere, z.B. drei, Geräte, ein erstes Gerät GE, ein zweites Gerät GE' und ein drittes Gerät GE", umfassen, die zusammen mit gegebenenfalls weiteren Geräten als die drei dargestellten Geräte GE, GE', GE" als Datenquellen allesamt Gerätebetriebsdaten GBD zur Verfügung stellen und in dem Gerätenetzwerk GNW miteinander verbunden sind.

Von den in der FIGUR 2 wie in der FIGUR 1 dargestellten, das bzw. die Gerätenetzwerke GNW bildenden Geräten GE, GE', GE" weist das erste Gerät GE einen ersten Controller CTR, der mit einen ersten Sensor SE und einem ersten Aktor AK verbunden ist, wobei sowohl der erste Sensor SE als auch der erste Aktor AK Daten liefern, die als Betriebsdaten BD des ersten Gerätes GE, also als gerätespezifische Betriebsdaten BD, der Gerätebetriebsdaten GBD in dem ersten Controller CTR gespeichert werden.

Das zweite Gerät GE' weist einen zweiten Controller CTR', der mit einen zweiten Sensor SE' und einem zweiten Aktor AK' verbunden ist, wobei auch hier wieder sowohl der zweite Sensor SE' als auch der zweite Aktor AK' Daten liefern, die als weitere Betriebsdaten BD' des zweiten Gerätes GE, also als weitere gerätespezifische Betriebsdaten BD', der Gerätebetriebsdaten GBD in dem zweiten Controller CTR' gespeichert werden.

Ein wenig anders sieht auch hier die Situation beim dritten Gerät GE" aus. Das dritte Gerät GE" weist zwar auch wieder einen Controller auf, nämlich einen dritten Controller CTR", allerdings ist dieser im Unterschied zu den Controllern CTR, CTR' der anderen beiden Geräten GE, GE' nicht mit einem Daten liefernden Sensor und Aktor verbunden. Nichtsdestotrotz liefert auch das dritte Gerät GE" als Datenquelle gerätespezifische Betriebsdaten der Gerätebetriebsdaten GBD. So sind in dem dritten Controller CTR" zusätzliche Betriebsdaten BD" des dritten Gerätes GE" gespeichert, die als Anlageerzeugungsdaten ALED der technischen Anlage AL, AAL ausgebildet sind. Die Anlageerzeugungsdaten ALED sind Daten die dadurch erzeugt werden, dass das dritte Gerät GE" von den anderen beiden Geräten GE, GE' in dem Gerätenetzwerk GNW Gerätebetriebsdaten GBD erhält und die Anlageerzeugungsdaten ALED aus diesen übertragenen Gerätebetriebsdaten GBD, z.B. durch Berechnung, erzeugt werden.

Die Controller CTR, CTR', CTR" sind wieder vorzugsweise und nicht zuletzt im Fall der Automatisierungsanlage AAL als Programmable Logic Controller (PLC) ausgebildet.

Im Unterschied zu den Controller CTR, CTR', CTR" in der FIGUR 1 weisen die in der FIGUR 2 dargestellten Controller CTR, CTR', CTR" jeweils, wie das in der FIGUR 2 dargestellte Datenvisualisierungssystem DVS, das Vorprojektierungs-/Vorkonfigurationsprogramm VPKP auf, das in den Controller CTR, CTR', CTR" jeweils gespeichert ist. Welche Bedeutung diesem in den Controller CTR, CTR', CTR" jeweils gespeicherten Vorprojektierungs-/Vorkonfigurationsprogramm VPKP im Kontext des dezentralen Engineerings bei der Projektierung/Konfiguration der Bildschirminhalte für die Bildschirminhaltvisualisierung zukommt, wird weiter unten bei der Beschreibung der FIGUR 2 erläutert.

Für die dezentrale Projektierung/Konfiguration der Bildschirmvisualisierungsinhalte wird in jedem Gerät GE, GE', GE" des Gerätenetzwerkes GNW vorzugsweise im Zuge der Geräteherstellung ein Satz von Visualisierungsaspekten, ein erster Visualisierungsaspektsatz VAS mit z.B. fünf (wie in der FIGUR 2 durch eine Strichliste dargestellt) Visualisierungsaspekten in dem ersten Gerät GE, ein zweiten Visualisierungsaspektsatz VAS' mit z.B. drei (wie in der FIGUR 2 durch eine Strichliste dargestellt) Visualisierungsaspekten in dem zweiten Gerät GE' und ein dritter Visualisierungsaspektsatz VAS" mit z.B. vier (wie in der FIGUR 2 durch eine Strichliste dargestellt) Visualisierungsaspekten in dem dritten Gerät GE" zur Verfügung gestellt und entsprechend in dem jeweiligen Controller CTR, CTR', CTR" hinterlegt.

Ebenfalls vorzugsweise im Zuge der Geräteherstellung lässt sich jeder Visualisierungsaspekt mit an diesem Visualisierungsaspekt jeweils gebundene gerätespezifische Betriebsdaten BD, BD', BD" der Gerätebetriebsdaten GBD verknüpfen. So lassen sich z.B. im Zuge der Geräteherstellung fünf erste Visualisierungsaspekte VA des ersten Visualisierungsaspektsatzes VAS mit den ersten Betriebsdaten BD, drei zweite Visualisierungsaspekte VA' des zweiten Visualisierungsaspektsatzes VAS' mit den zweiten Betriebsdaten BD' und vier dritte Visualisierungsaspekte VA" des dritten Visualisierungsaspektsatzes VAS" mit den dritten Betriebsdaten BD", z.B. herstellungsprogrammgesteuert (durch ein bei der Geräteherstellung verwendetes Verknüpfungsprogramm), verknüpfen.

Mit dieser Verknüpfung wird jeweils ein Projektierungs-/Konfigurationsprogramm mit jeweils einer Vielzahl von Überwachungs-/Kontrollobjekten erzeugt und entsprechend in dem jeweiligen Controller CTR, CTR', CTR" hinterlegt und zwar ein erstes Projektierungs-/Konfigurationsprogramm PKP mit fünf ersten Überwachungs-/Kontrollobjekten ÜKO, die die Verknüpfung der fünf ersten Visualisierungsaspekte VA mit den ersten Betriebsdaten BD bestimmen und angeben, ein zweites Projektierungs-/Konfigurationsprogramm PKP' mit drei zweiten Überwachungs-/Kontrollobjekten ÜKO', die die Verknüpfung der drei zweiten Visualisierungsaspekte VA' mit den zweiten Betriebsdaten BD' bestimmen und angeben, sowie ein drittes Projektierungs-/Konfigurationsprogramm PKP" mit vier dritten Überwachungs-/Kontrollobjekten ÜKO", die die Verknüpfung der vier dritten Visualisierungsaspekte VA" mit den dritten Betriebsdaten BD bestimmen und angeben.

Der Visualisierungsaspekt einschließlich der Datenbindung, also den Bindungen zu den Betriebsdaten BD, BD', BD", beinhaltet dabei wieder beispielsweise die grafische Repräsentation der gewünschten oder notwendigen Bildinformationen, Graphen, die Visualisierungs-/Darstellungslogik, die Verknüpfung mit der Datenquelle als das Gerät GE, GE', GE" mit den gerätespezifischen Betriebsdaten BD, BD', BD", usw.

Der dezentrale Engineering-Workflow zum Projektieren/Konfigurieren der Bildschirmvisualisierungsinhalte auf dem Datenvisualisierungssystem DVS bzw. dem HMI-Terminal oder der HMI-Anwendung soll nachfolgend exemplarisch anhand der in dem ersten Controller CTR des ersten Gerätes GE der Anlage AL, AAL gespeicherten ersten Betriebsdaten BD, dem dort hinterlegten ersten Visualisierungsaspektsatz VAS mit den fünf, zu den ersten Betriebsdaten BD verknüpften, ersten Visualisierungsaspekten VA und dem ersten Projektierungs-/Konfigurationsprogramm PKP mit der ersten Vielzahl von Überwachungs-/Kontrollobjekten ÜKO, die die Verknüpfung der fünf ersten Visualisierungsaspekte VA mit den ersten Betriebsdaten BD bestimmen und angeben, erläutert werden.

Alternativ könnte der Workflow - ohne jegliche Einschränkung - auch anhand der zweiten oder dritten der Geräte GE', GE", als dediziert betrachtete Geräte, mit den gerätespezifischen Betriebsdaten BD', BD" skizziert werden.

Der dezentrale Engineering-Workflow beginnt damit, dass das Datenvisualisierungssystem DVS in das Gerätenetzwerk GNW der Anlage AL, AAL eingebunden wird, indem das Datenvisualisierungssystem DVS mit dem ersten Gerät GE über eine Kommunikationsverbindung KV verbunden wird, wobei diese jeweils durch eine Logische Verbindung LOV und eine Physikalische Verbindung PHV charakterisiert ist. Selbstverständlich kann das Datenvisualisierungssystem DVS oder das weitere in der FIGUR 2 dargestellte Datenvisualisierungssystem DVS auch mit den anderen Geräten GE, GE bzw. mit dem ersten Gerät GE entsprechend verbunden werden. Auf eine entsprechende Berücksichtigung der grafischen Darstellung in der FIGUR 2 ist wegen der exemplarischen Erläuterung des dezentrale Engineering-Workflow zum Projektieren/Konfigurieren der Bildschirmvisualisierungsinhalte anhand des ersten Gerätes GE verzichtet worden.

In einem nächsten Schritt des dezentralen Engineering-Workflows wird beim Einbinden des Datenvisualisierungssystems DVS in das Gerätenetzwerk GNW und Ausführen der Steuerprogrammbefehle des Programm-Moduls PGM durch den Prozessor PZ auf der Basis des in dem Programm-Modul PGM des Speichers SP in dem Datenvisualisierungssystem DVS und in dem ersten Gerät GE enthaltenen Vorprojektierungs-/Vorkonfigurationsprogramms VPKP ein Plug-and-Play-Protokoll PPP zwischen dem Prozessor PZ und dem ersten Gerät GE über die Logische Verbindung LOV ausgeführt und abgewickelt, um das Datenvisualisierungssystem DVS mit dem ersten Gerät GE kommunikations- und steuerungstechnisch zu verbinden.

In einem sich daran anschließenden Schritt des dezentralen Engineering-Workflows wird - beim weiteren Ausführen der Steuerprogrammbefehle des Programm-Moduls PGM durch den Prozessor PZ im Zuge dieser kommunikations- und steuerungstechnischen Verbindung und der ebenfalls über die Logische Verbindung LOV dedizierten (gewählten) Ansteuerung des ersten Gerätes GE in dem Gerätenetzwerk GNW - das in dem ersten Gerät GE z.B. bei der Geräteherstellung generierte und dort hinterlegte Projektierungs-/Konfigurationsprogramm PKP mit den fünf ersten Überwachungs-/Kontrollobjekten ÜKO, die die Verknüpfung der fünf ersten Visualisierungsaspekte VA des ersten Visualisierungsaspektsatzes VAS mit den ersten Betriebsdaten BD bestimmen und angeben, in den Speicher SP des Datenvisualisierungssystems DVS zur Projektierung/Konfiguration des zu visualisierenden Bildschirminhaltes BSI geladen. Dieses Laden des Projektierungs-/Konfigurationsprogramm PKP mit den fünf ersten Überwachungs-/Kontrollobjekten ÜKO erfolgt vorzugsweise derart, dass das Projektierungs-/Konfigurationsprogramm PKP mit dem Laden Bestandteil des Programm-Modul PGM wird.

In einem abschließenden Schritt des dezentralen Engineering-Workflows führt der Prozessor PZ das in den Speicher SP geladene Projektierungs-/Konfigurationsprogramm PKP derart aus, dass
**a**) in Bezug auf einen aus dem ersten Satz der Visualisierungsaspekte VAS mit den ersten Visualisierungsaspekten VA ausgewählten Visualisierungsaspekt VA* ein dazu korrespondierendes Überwachungs-/Kontrollobjekt ÜKO* aus den ersten Überwachungs-/Kontrollobjekten ÜKO ausgewählt wird,
**b)** gemäß der Visualisierungsaspekt-bezogenen Datenbindung des ausgewählten Überwachungs-/Kontrollobjekts ÜKO* zu dieser Auswahl korrespondierende Betriebsdaten BD* der gerätspezifische Betriebsdaten BD, BD', BD" aus dem ersten Gerät GE in das Datenvisualisierungssystem DVS - z.B. in den Prozessor PZ oder vorzugsweise in den Speicher SP, wie in der FIGUR 2 dargestellt - geladen werden und
**c)** die zu dem ausgewählten Überwachungs-/Kontrollobjekt ÜKO* korrespondierenden Betriebsdaten BD*, also die ausgewählten Betriebsdaten BD*, in Bezug auf den ausgewählten Visualisierungsaspekt VA* als der Bildschirminhalt BSI visualisiert werden.

Der Visualisierungsaspekt VA* aus dem ersten Satz der Visualisierungsaspekte VAS und das dazu korrespondierende, ausgewählte Überwachungs-/Kontrollobjekt ÜKO* sind mit Hilfe des Auswahlmenüs AWM auswählbar.

## Patentansprüche

1. Verfahren zur Visualisierung von Bildschirminhalten auf einem Datenvisualisierungssystem (DVS), bei dem
**a**) im Kontext der Funktionalitätsüberwachung und -kontrolle von mindestens einem anlage- und betriebstechnisch zu einem Gerätenetzwerk (GNW) vernetzten Gerät (GE, GE', GE") einer technischen Anlage (AL), insbesondere einer Automatisierungsanlage (AAL) im Produktionsprozess, zur Projektierung/Konfiguration eines Bildschirminhaltes (BSI)
**a1**) Gerätebetriebsdaten (GBD) für die Funktionalitätsüberwachung und -kontrolle erfasst und für das Datenvisualisierungssystem (DVS) bereitgestellt werden,
**a2)** aus einem für das Gerät (GE, GE', GE") verfügbaren Satz von Visualisierungsaspekten (VAS, VAS', VAS") jeder Visualisierungsaspekt (VA, VA', VA" ) mit an diesem Visualisierungsaspekt jeweils gebundene gerätespezifische Betriebsdaten (BD, BD*, BD', BD") der Gerätebetriebsdaten (GBD) verknüpfbar ist,
**b)** beim Einbinden (KV, LOV, PHV) des Datenvisualisierungssystems (DVS) in das Gerätenetzwerk (GNW) auf der Basis eines in dem Datenvisualisierungssystem (DVS) und in dem Gerät (GE, GE', GE") enthaltenen Vorprojektierungs-/Vorkonfigurationsprogramms (VPKP) ein Plug-and-Play-Protokoll (PPP) zwischen dem Datenvisualisierungssystem (DVS) und dem Gerät (GE, GE', GE") ausgeführt wird, mit dem das Datenvisualisierungssystem (DVS) mit dem Gerät (GE, GE', GE") kommunikations- und steuerungstechnisch verbunden wird, **dadurch gekennzeichnet, dass**
**c)** im Zuge dieser kommunikations- und steuerungstechnischen Verbindung (KV, LOV, PHV) bei einer gewählten Ansteuerung des Gerätes (GE, GE', GE") in dem Gerätenetzwerk (GNW) ein in dem Gerät (GE, GE', GE") zur Verfügung gestelltes Projektierungs-/Konfigurationsprogramm (PKP, PKP', PKP") mit einer Vielzahl von Überwachungs-/Kontrollobjekten (ÜKO, ÜKO', ÜKO"), wobei die Überwachungs-/Kontrollobjekte (ÜKO, ÜKO', ÜKO") durch die Verknüpfung des Satzes der Visualisierungsaspekten (VAS, VAS', VAS") mit den Visualisierungsaspekten (VA, VA', VA") und Visualisierungsaspekt-bezogenen Datenbindungen der gerätespezifischen Betriebsdaten (BD, BD', BD") bestimmt und angegeben werden, in das Datenvisualisierungssystem (DVS) zur Projektierung/Konfiguration des zu visualisierenden Bildschirminhaltes (BSI) geladen wird,
**d)** das in das Datenvisualisierungssystem (DVS) geladene Projektierungs-/Konfigurationsprogramm (PKP, PKP', PKP") ausgeführt wird, indem
**d1**) in Bezug auf einen aus dem Satz der Visualisierungsaspekten (VAS, VAS', VAS") mit den Visualisierungsaspekten (VA, VA', VA") ausgewählten Visualisierungsaspekt (VA*) ein dazu korrespondierendes Überwachungs-/Kontrollobjekt (ÜKO*) aus den Überwachungs-/Kontrollobjekten (ÜKO, ÜKO', ÜKO") ausgewählt wird,
**d2)** gemäß der Visualisierungsaspekt-bezogenen Datenbindung des ausgewählten Überwachungs-/Kontrollobjekts (ÜKO*) zu dieser Auswahl korrespondierende Betriebsdaten (BD*) der gerätespezifischen Betriebsdaten (BD, BD', BD") in das Datenvisualisierungssystem (DVS) geladen werden und
**d3)** die ausgewählten Betriebsdaten (BD*) in Bezug auf den ausgewählten Visualisierungsaspekt (VA*) als der Bildschirminhalt (BSI) visualisiert werden.

2. Verfahren nach Anspruch 1, **dadurch gekennzeichnet, dass**
ein HMI-Terminal oder eine HMI-Anwendung als das Datenvisualisierungssystem (DVS) benutzt wird.

3. Verfahren nach Anspruch 1 oder 2, **dadurch gekennzeichnet, dass**
der Satz der Visualisierungsaspekte (VAS, VAS', VAS") mit den Visualisierungsaspekten (VA, VA', VA", VA*) und das Projektierungs-/Konfigurationsprogramm (PKP, PKP', PKP") mit den Überwachungs-/Kontrollobjekten (ÜKO, ÜKO', ÜKO", ÜKO*) im Zuge der Geräteherstellung zur Verfügung gestellt wird.

4. Verfahren nach einem der Ansprüche 1 bis 3, **dadurch gekennzeichnet, dass**
die Betriebsdaten (BD, BD', BD", BD*) und die Gerätebetriebsdaten (GBD) zumindest eines von Sensordaten (SE, SE'), Aktordaten (AK, AK') und Anlageerzeugungsdaten (ALED) der technischen Anlage (AL, AAL) sind.

5. Verfahren nach einem der Ansprüche 1 bis 4, **dadurch gekennzeichnet, dass**
der ausgewählte Visualisierungsaspekt (VA*) aus dem Satz der Visualisierungsaspekte (VAS, VAS', VAS") und das dazu korrespondierende ausgewählte Überwachungs-/Kontrollobjekt (ÜKO*) mit Hilfe eines Auswahlmenüs (AWM) auf einem Bildschirm (BS) des Datenvisualisierungssystems (DVS) ausgewählt wird.

6. Datenvisualisierungssystem (DVS) zur Visualisierung von Bildschirminhalten, mit einem nicht-flüchtigen, lesbaren Speicher (SP), in dem prozessorlesbare Steuerprogrammbefehle eines die Bildschirminhaltvisualisierung durchführenden Programm-Moduls (PGM) gespeichert sind, und ein mit dem Speicher (SP) verbundener Prozessor (PZ), der die Steuerprogrammbefehle des Programm-Moduls (PGM) zur Bildschirminhaltvisualisierung ausführt, wobei
**a**) im Kontext der Funktionalitätsüberwachung und -kontrolle von mindestens einem anlage- und betriebstechnisch zu einem Gerätenetzwerk (GNW) vernetzten Gerät (GE, GE', GE") einer technischen Anlage (AL), insbesondere einer Automatisierungsanlage (AAL) im Produktionsprozess, zur Projektierung/Konfiguration eines Bildschirminhaltes (BSI)
**a1**) Gerätebetriebsdaten (GBD) für die Funktionalitätsüberwachung und -kontrolle erfasst und für das Datenvisualisierungssystem (DVS) bereitgestellt werden,
**a2)** aus einem für das Gerät (GE, GE', GE") verfügbaren Satz von Visualisierungsaspekten (VAS, VAS', VAS") jeder Visualisierungsaspekt (VA, VA', VA" ) mit an diesem Visualisierungsaspekt jeweils gebundene gerätespezifische Betriebsdaten (BD, BD*, BD', BD") der Gerätebetriebsdaten (GBD) verknüpfbar ist, der Prozessor (PZ) und das Programm-Modul (PGM) derart ausgebildet sind und der Prozessor (PZ) die Steuerprogrammbefehle des Programm-Moduls (PGM) derart ausführt, dass
**b)** beim Einbinden (KV, LOV, PHV) des Datenvisualisierungssystems (DVS) in das Gerätenetzwerk (GNW) auf der Basis eines in dem Programm-Modul (PGM) des Speichers (SP) in dem Datenvisualisierungssystem (DVS) und in dem Gerät (GE, GE', GE") enthaltenen Vorprojektierungs-/Vorkonfigurationsprogramms (VPKP) ein Plug-and-Play-Protokoll (PPP) zwischen dem Prozessor (PZ) und dem Gerät (GE, GE', GE") ausgeführt wird, mit dem das Datenvisualisierungssystem (DVS) mit dem Gerät (GE, GE', GE") kommunikations- und steuerungstechnisch verbunden wird, **dadurch gekennzeichnet, dass**
**c)** im Zuge dieser kommunikations- und steuerungstechnischen Verbindung (KV, LOV, PHV) bei einer gewählten Ansteuerung des Gerätes (GE, GE', GE") in dem Gerätenetzwerk (GNW) ein in dem Gerät (GE, GE', GE") zur Verfügung gestelltes Projektierungs-/Konfigurationsprogramm (PKP, PKP', PKP") mit einer Vielzahl von Überwachungs-/Kontrollobjekten (ÜKO, ÜKO', ÜKO"), wobei die Überwachungs-/Kontrollobjekte (ÜKO, ÜKO', ÜKO") durch die Verknüpfung des Satzes der Visualisierungsaspekten (VAS, VAS', VAS") mit den Visualisierungsaspekten (VA, VA', VA") und Visualisierungsaspekt-bezogenen Datenbindungen zu den gerätespezifischen Betriebsdaten (BD, BD', BD") bestimmt und angegeben werden, über den Prozessor (PZ) in den Speicher (SP), vorzugsweise als Bestandteil des Programm-Modul (PGM), zur Projektierung/Konfiguration des zu visualisierenden Bildschirminhaltes (BSI) geladen wird,
**d)** das in den Speicher (SP) geladene Projektierungs-/Konfigurationsprogramm (PKP, PKP', PKP") ausgeführt wird, indem
**d1**) in Bezug auf einen aus dem Satz der Visualisierungsaspekte (VAS, VAS', VAS") mit den Visualisierungsaspekten (VA, VA', VA") ausgewählten Visualisierungsaspekt (VA*) ein dazu korrespondierendes Überwachungs-/Kontrollobjekt (ÜKO*) aus den Überwachungs-/Kontrollobjekten (ÜKO, ÜKO', ÜKO") ausgewählt wird,
**d2)** gemäß der Visualisierungsaspekt-bezogenen Datenbindung des ausgewählten Überwachungs-/Kontrollobjekts (ÜKO*) zu dieser Auswahl korrespondierende Betriebsdaten (BD*) der gerätspezifische Betriebsdaten (BD, BD', BD") in das Datenvisualisierungssystem (DVS) - z.B. in den Prozessor (PZ) oder vorzugsweise in den Speicher (SP) - geladen werden und
**d3)** die ausgewählten Betriebsdaten (BD*) in Bezug auf den ausgewählten Visualisierungsaspekt (VA*) als der Bildschirminhalt (BSI) visualisiert werden.

7. Datenvisualisierungssystem (DVS) nach Anspruch 6, **gekennzeichnet durch**
ein HMI-Terminal oder eine HMI-Anwendung.

8. Datenvisualisierungssystem (DVS) nach Anspruch 6 oder 7, **dadurch gekennzeichnet, dass**
der Satz der Visualisierungsaspekten (VAS, VAS', VAS") und das Projektierungs-/Konfigurationsprogramm (PKP, PKP', PKP") mit den Überwachungs-/Kontrollobjekten (ÜKO, ÜKO', ÜKO", ÜKO*) im Zuge der Geräteherstellung zur Verfügung gestellt wird.

9. Datenvisualisierungssystem (DVS) nach einem der Ansprüche 6 bis 8, **dadurch gekennzeichnet, dass** die Betriebsdaten (BD, BD', BD", BD*) und die Gerätebetriebsdaten (GBD) zumindest eines von Sensordaten (SE, SE'), Aktordaten (AK, AK') und Anlageerzeugungsdaten (ALED) der technischen Anlage (AL, AAL) sind.

10. Datenvisualisierungssystem (DVS) nach einem der Ansprüche 6 bis 9, **gekennzeichnet durch**
einen Bildschirm (BS), auf dem der ausgewählte Visualisierungsaspekt (VA*) aus dem Satz der Visualisierungsaspekte (VAS, VAS', VAS") und das dazu korrespondierende, ausgewählte Überwachungs-/Kontrollobjekt (ÜKO*) mit Hilfe eines Auswahlmenüs (AWM) auswählbar sind.

## Claims

1. Method for visualizing screen content on a data visualization system (DVS), in which
**a**) in the context of monitoring and controlling the functionality of at least one device (GE, GE', GE''), which is networked in an installation-related and operational manner to form a device network (GNW), in a technical installation (AL), in particular an automation installation (AAL) in the production process, for planning/configuring screen content (BSI)
**a1)** device operating data (GBD) for monitoring and controlling the functionality are captured and are provided for the data visualization system (DVS),
**a2)** from a set of visualization aspects (VAS, VAS', VAS") which is available for the device (GE, GE', GE"), each visualization aspect (VA, VA', VA") can be linked to device-specific operating data (BD, BD*, BD', BD") of the device operating data (GBD), which device-specific operating data are respectively tied to this visualization aspect,
**b)** when incorporating (KV, LOV, PHV) the data visualization system (DVS) in the device network (GNW) on the basis of a preplanning/preconfiguration program (VPKP) contained in the data visualization system (DVS) and in the device (GE, GE', GE"), a plug-and-play protocol (PPP) is executed between the data visualization system (DVS) and the device (GE, GE', GE"), which is used to connect the data visualization system (DVS) in terms of communication and control to the device (GE, GE', GE"), **characterized in that**
**c)** during this communication and control connection (KV, LOV, PHV) in the case of dedicated control of the device (GE, GE', GE") in the device network (GNW), a planning/configuration program (PKP, PKP', PKP") which is provided in the device (GE, GE', GE") and has a multiplicity of monitoring/control objects (UKO, ÜKO', ÜKO"), wherein the monitoring/control objects (UKO, ÜKO', ÜKO") are determined and stated by linking the set of visualization aspects (VAS, VAS', VAS") to the visualization aspects (VA, VA', VA") and visualization-aspect-based data bindings of the device-specific operating data (BD, BD', BD"), is loaded into the data visualization system (DVS) for the purpose of planning/configuring the screen content (BSI) to be visualized,
**d)** the planning/configuration program (PKP, PKP', PKP") loaded into the data visualization system (DVS) is executed by
**d1)** selecting, with respect to a visualization aspect (VA*) selected from the set of visualization aspects (VAS, VAS', VAS") having the visualization aspects (VA, VA', VA"), a corresponding monitoring/control object (ÜKO*) from the monitoring/control objects (UKO, ÜKO', ÜKO"),
**d2)** loading, according to the visualization-aspect-based data binding of the selected monitoring/control object (ÜKO*), operating data (BD*) of the device-specific operating data (BD, BD', BD"), which correspond to this selection, into the data visualization system (DVS), and
**d3)** visualizing the selected operating data (BD*) with respect to the selected visualization aspect (VA*) as the screen content (BSI).

2. Method according to Claim 1, **characterized in that** an HMI terminal or an HMI application is used as the data visualization system (DVS).

3. Method according to Claim 1 or 2, **characterized in that** the set of visualization aspects (VAS, VAS', VAS") having the visualization aspects (VA, VA', VA", VA*) and the planning/configuration program (PKP, PKP', PKP") having the monitoring/control objects (UKO, ÜKO', ÜKO", ÜKO*) are provided when producing the device.

4. Method according to one of Claims 1 to 3, **characterized in that**
the operating data (BD, BD', BD", BD*) and the device operating data (GBD) are at least one of sensor data (SE, SE'), actuator data (AK, AK') and installation generation data (ALED) of the technical installation (AL, AAL).

5. Method according to one of Claims 1 to 4, **characterized in that**
the selected visualization aspect (VA*) from the set of visualization aspects (VAS, VAS', VAS") and the corresponding selected monitoring/control object (ÜKO*) are selected with the aid of a selection menu (AWM) on a screen (BS) of the data visualization system (DVS).

6. Data visualization system (DVS) for visualizing screen content, having a non-volatile readable memory (SP) which stores processor-readable control program instructions of a program module (PGM) carrying out the screen content visualization, and a processor (PZ) which is connected to the memory (SP) and executes the control program instructions of the program module (PGM) for visualizing the screen content, wherein
**a**) in the context of monitoring and controlling the functionality of at least one device (GE, GE', GE"), which is networked in an installation-related and operational manner to form a device network (GNW), in a technical installation (AL), in particular an automation installation (AAL) in the production process, for planning/configuring screen content (BSI)
**a1)** device operating data (GBD) for monitoring and controlling the functionality are captured and are provided for the data visualization system (DVS),
**a2)** from a set of visualization aspects (VAS, VAS', VAS") which is available for the device (GE, GE', GE"), each visualization aspect (VA, VA', VA") can be linked to device-specific operating data (BD, BD*, BD', BD") of the device operating data (GBD), which device-specific operating data are respectively tied to this visualization aspect,
the processor (PZ) and the program module (PGM) are designed in such a manner and the processor (PZ) executes the control program instructions of the program module (PGM) in such a manner that
**b)** when incorporating (KV, LOV, PHV) the data visualization system (DVS) in the device network (GNW) on the basis of a preplanning/preconfiguration program (VPKP) contained in the program module (PGM) of the memory (SP) in the data visualization system (DVS) and in the device (GE, GE', GE"), a plug-and-play protocol (PPP) is executed between the processor (PZ) and the device (GE, GE', GE"), which is used to connect the data visualization system (DVS) in terms of communication and control to the device (GE, GE', GE"),
**characterized in that**
**c)** during this communication and control connection (KV, LOV, PHV) in the case of dedicated control of the device (GE, GE', GE") in the device network (GNW), a planning/configuration program (PKP, PKP', PKP") which is provided in the device (GE, GE', GE") and has a multiplicity of monitoring/control objects (UKO, ÜKO', ÜKO"), wherein the monitoring/control objects (UKO, ÜKO', ÜKO") are determined and stated by linking the set of visualization aspects (VAS, VAS', VAS") to the visualization aspects (VA, VA', VA") and visualization-aspect-based data bindings to the device-specific operating data (BD, BD', BD"), is loaded into the memory (SP), preferably as part of the program module (PGM), via the processor (PZ) for the purpose of planning/configuring the screen content (BSI) to be visualized,
**d)** the planning/configuration program (PKP, PKP', PKP") loaded into the memory (SP) is executed by
**d1)** selecting, with respect to a visualization aspect (VA*) selected from the set of visualization aspects (VAS, VAS', VAS") having the visualization aspects (VA, VA', VA"), a corresponding monitoring/control object (ÜKO*) from the monitoring/control objects (UKO, ÜKO', UKO"),
**d2)** loading, according to the visualization-aspect-based data binding of the selected monitoring/control object (ÜKO*), operating data (BD*) of the device-specific operating data (BD, BD', BD"), which correspond to this selection, into the data visualization system (DVS), for example into the processor (PZ) or preferably into the memory (SP), and
**d3)** visualizing the selected operating data (BD*) with respect to the selected visualization aspect (VA*) as the screen content (BSI).

7. Data visualization system (DVS) according to Claim 6, **characterized by**
an HMI terminal or an HMI application.

8. Data visualization system (DVS) according to Claim 6 or 7, **characterized in that**
the set of visualization aspects (VAS, VAS', VAS") and the planning/configuration program (PKP, PKP', PKP") having the monitoring/control objects (UKO, ÜKO', ÜKO", ÜKO*) are provided when producing the device.

9. Data visualization system (DVS) according to one of Claims 6 to 8, **characterized in that**
the operating data (BD, BD', BD", BD*) and the device operating data (GBD) are at least one of sensor data (SE, SE'), actuator data (AK, AK') and installation generation data (ALED) of the technical installation (AL, AAL).

10. Data visualization system (DVS) according to one of Claims 6 to 9, **characterized by**
a screen (BS) on which the selected visualization aspect (VA*) from the set of visualization aspects (VAS, VAS', VAS") and the corresponding selected monitoring/control object (ÜKO*) can be selected with the aid of a selection menu (AWM).

## Revendications

1. Procédé de visualisation de contenus d'écran sur un système de visualisation de données (DVS), dans lequel
**a)** dans le contexte de la surveillance et du contrôle de la fonctionnalité d'au moins un appareil (GE, GE', GE"), interconnecté à un réseau d'appareils (GNW) en termes de technique d'installation et de fonctionnement, d'une installation technique (AL), plus particulièrement d'une installation d'automatisation (AAL) dans un processus de production, pour la projection/la configuration d'un contenu d'écran (BSI)
**a1**) des données de fonctionnement des appareils (GBD) pour la surveillance et le contrôle de la fonctionnalité sont saisies et mises à disposition pour le système de visualisation de données (DVS),
**a2**) à partir d'un lot d'aspects de visualisation (VAS, VAS', VAS") disponible pour l'appareil (GE, GE', GE"), chaque aspect de visualisation (VA, VA', VA") peut être combiné à des données de fonctionnement (BD, BD*, BD', BD"), spécifiques aux appareils et reliées à chaque fois à cet aspect de visualisation, des données de fonctionnement des appareils (GBD)
**b)** lors de l'intégration (KV, LOV, PHV) du système de visualisation de données (DVS) dans le réseau d'appareils (GNW) sur la base d'un programme de pré-projection/pré-configuration (VPKP) contenu dans le système de visualisation de données (DVS) et dans l'appareil (GE, GE', GE"), un protocole Plug-and-Play (PPP) est exécuté entre le système de visualisation de données (DVS) et l'appareil (GE, GE', GE"), avec lequel le système de visualisation de données (DVS) est relié à l'appareil (GE, GE', GE") en termes de technique de communication et de commande, **caractérisé en ce que**
**c)** au cours de cette liaison (KV, LOV, PHV) en termes de technique de communication et de commande lors d'une commande sélectionnée de l'appareil (GE, GE', GE") dans le réseau d'appareils (GNW), un programme de projection/de configuration (PKP, PKP', PKP") mis à disposition dans l'appareil (GE, GE', GE") avec une pluralité d'objets de surveillance/contrôle (ÜKO, ÜKO', ÜKO"), dans lequel les objets de surveillance/contrôle (ÜKO, ÜKO', ÜKO") sont déterminés et indiqués par la combinaison du lot des aspects de visualisation (VAS, VAS', VAS") avec les aspects de visualisation (VA, VA', VA") et les liaisons de données, relatives à l'aspect de visualisation, des données de fonctionnement (BD, BD', BD") spécifiques aux appareils, est chargé dans le système de visualisation de données (DVS) pour la projection/la configuration du contenu d'écran (BSI) à visualiser,
**d)** le programme de projection/de configuration (PKP, PKP', PKP") chargé dans le système de visualisation de données (DVS) est exécuté, par le fait que
**d1**) par rapport à un aspect de visualisation (VA*) sélectionné dans le lot des aspects de visualisation (VAS, VAS', VAS") avec les aspects de visualisation (VA, VA', VA"), un objet de surveillance/contrôle (ÜKO*) y correspondant est sélectionné parmi les objets de surveillance/contrôle (ÜKO, ÜKO', ÜKO"),
**d2)** selon la liaison de données relative à l'aspect de visualisation de l'objet de surveillance/contrôle sélectionné (ÜKO), des donnés de fonctionnement (BD*), correspondants à cette sélection, des données de fonctionnement (BD, BD', BD") spécifiques aux appareils sont chargées dans le système de visualisation d'aspect (DVS) et
**d3)** les données de fonctionnement sélectionnées (BD*) sont visualisées par rapport à l'aspect de visualisation sélectionné (VA*) comme contenu d'écran (BSI).

2. Procédé selon la revendication 1, **caractérisé en ce qu'**un terminal HMI ou une application HMI est utilisé(e) comme système de visualisation de données (DVS).

3. Procédé selon la revendication 1 ou 2, **caractérisé en ce que** le lot des aspects de visualisation (VAS, VAS', VAS") avec les aspects de visualisation (VA, VA', VA", VA*) et le programme de projection/de configuration (PKP, PKP', PKP") avec les objets de surveillance/contrôle (ÜKO, ÜKO', ÜKO", ÜKO*) sont mis à disposition au cours de la production des appareils.

4. Procédé selon l'une des revendications 1 à 3, **caractérisé en ce que** les données de fonctionnement (BD, BD', BD", BD*) et les données de fonctionnement des appareils (GBD) sont au moins l'une des données de capteur (SE, SE'), des données du dispositif d'actionnement (AK, AK') et des données de production d'installation (ALED) de l'installation technique (AL, AAL).

5. Procédé selon l'une des revendications 1 à 4, **caractérisé en ce que** l'aspect de visualisation sélectionné (VA*) dans le lot des aspects de visualisation (VAS, VAS', VAS") et l'objet de surveillance/contrôle (ÜKO) sélectionné y correspondant est sélectionné à l'aide d'un menu de sélection (AWM) sur un écran (BS) du système de visualisation de données (DVS).

6. Système de visualisation de données (DVS) destiné à la visualisation de contenus d'écran, avec une mémoire (SP) lisible, non volatile dans laquelle sont enregistrés des ordres de programmes de commande lisibles par un processeur d'un module de programme (PGM) exécutant la visualisation de contenu d'écran, et un processeur (PZ) relié à la mémoire (SP), qui exécute les ordres du programme de commande du module de programme (PGM) destiné à la visualisation du contenu d'écran, dans lequel
**a)** dans le contexte de la surveillance et du contrôle de la fonctionnalité d'au moins un appareil (GE, GE', GE"), interconnecté à un réseau d'appareils (GNW) en termes de technique d'installation et de fonctionnement, d'une installation technique (AL), plus particulièrement d'une installation d'automatisation (AAL) dans le processus de production, pour la projection/la configuration d'un contenu d'écran (BSI)
**a1**) des données de fonctionnement des appareils (GBD) pour la surveillance et le contrôle de la fonctionnalité sont saisies et mises à disposition pour le système de visualisation de données (DVS),
**a2**) à partir d'un lot d'aspects de visualisation (VAS, VAS', VAS") disponible pour l'appareil (GE, GE', GE"), chaque aspect de visualisation (VA, VA', VA") peut être combiné à des données de fonctionnement (BD, BD*, BD', BD"), spécifiques aux appareils et reliées à chaque fois à cet aspect de visualisation, des données de fonctionnement des appareils (GBD), le processeur (PZ) et le module de programme (PGM) sont conçus de manière telle et le processeur (PZ) exécute les ordres de programme de commande du module de programme (PGM) de manière telle que
**b)** lors de l'intégration (KV, LOV, PHV) du système de visualisation de données (DVS) dans le réseau d'appareils (GNW) sur la base d'un programme de pré-projection/pré-configuration (VPKP) contenu dans le système de visualisation de données (DVS) et dans l'appareil (GE, GE', GE"), un protocole Plug-and-Play (PPP) est exécuté entre le processeur (PZ) et l'appareil (GE, GE', GE"), avec lequel le système de visualisation de données (DVS) est relié à l'appareil (GE, GE', GE") en termes de technique de communication et de commande, **caractérisé en ce que**
**c)** au cours de cette liaison (KV, LOV, PHV) en termes de technique de communication et de commande lors d'une commande sélectionnée de l'appareil (GE, GE', GE") dans le réseau d'appareils (GNW), un programme de projection/de configuration (PKP, PKP', PKP") mis à disposition dans l'appareil (GE, GE', GE") avec une pluralité d'objets de surveillance/contrôle (ÜKO, ÜKO', ÜKO"), dans lequel les objets de surveillance/contrôle (ÜKO, ÜKO', ÜKO") sont déterminés et indiqués par la combinaison du lot des aspects de visualisation (VAS, VAS', VAS") avec les aspects de visualisation (VA, VA', VA") et les liaisons de données, relatives à l'aspect de visualisation, des données de fonctionnement (BD, BD', BD") spécifiques aux appareils, est chargé dans la mémoire (SP) par le processeur (PZ), de préférence comme élément du module de programme (PGM), pour la projection/la configuration du contenu d'écran (BSI) à visualiser,
**d)** le programme de projection/de configuration (PKP, PKP', PKP") chargé dans la mémoire (SP) est exécuté, par le fait que
**d1**) par rapport à un aspect de visualisation (VA*) sélectionné dans le lot des aspects de visualisation (VAS, VAS', VAS") avec les aspects de visualisation (VA, VA', VA"), un objet de surveillance/contrôle (ÜKO*) y correspondant est sélectionné parmi les objets de surveillance/contrôle (ÜKO, ÜKO', ÜKO"),
**d2)** selon la liaison de données relative à l'aspect de visualisation de l'objet de surveillance/contrôle sélectionné (ÜKO), des donnés de fonctionnement (BD*), correspondants à cette sélection, des données de fonctionnement (BD, BD', BD") spécifiques aux appareils sont chargées dans le système de visualisation d'aspect (DVS) - par exemple, dans le processeur (PZ) ou, de préférence, dans la mémoire (SP) - et
**d3)** les données de fonctionnement sélectionnées (BD*) sont visualisées par rapport à l'aspect de visualisation sélectionné (VA*) comme contenu d'écran (BSI).

7. Système de visualisation de données (DVS) selon la revendication 6, **caractérisé par** un terminal HMI ou une application HMI.

8. Système de visualisation de données (DVS) selon la revendication 6 ou 7, **caractérisé en ce que** le lot des aspects de visualisation (VAS, VAS', VAS") et le programme de projection/de configuration (PKP, PKP', PKP") avec les objets de surveillance/contrôle (ÜKO, ÜKO', ÜKO", ÜKO*) est mis à disposition au cours de la production des appareils.

9. Système de visualisation de données (DVS) selon l'une des revendications 6 à 8, **caractérisé en ce que** les données de fonctionnement (BD, BD', BD" , BD*) et les données de fonctionnement des appareils (GBD) sont au moins l'une des données de capteur (SE, SE'), des données du dispositif d'actionnement (AK, AK') et des données de production d'installation (ALED) de l'installation technique (AL, AAL).

10. Système de visualisation de données (DVS) selon l'une des revendications 6 à 9, **caractérisé par** un écran (BS), sur lequel peuvent être sélectionnés, à l'aide d'un menu de sélection (AWM), l'aspect de visualisation sélectionné (VA*) dans le lot des aspects de visualisation (VAS, VAS', VAS") et l'objet de surveillance/contrôle (ÜKO) sélectionné, y correspondant.
